# EUROPEAN PATENT APPLICATION

(11) **EP 3 196 826 A1**
(43) Date of publication of application: **26.07.2017**
(21) Application number: 14902068.7
(22) Date of filing: 17.09.2014
(51) Int. Cl.: G06Q 30/06

(54) **FOOD EXPIRATION DATE MANAGEMENT DEVICE**

(71) Applicant: Ishida Co., Ltd., Kyoto-shi, Kyoto 606-8392 (JP)
(72) Inventor: HIRATSUKA, Toru, Ritto-shi Shiga 520-3026 (JP)
(74) Representative: Global IP Europe Patentanwaltskanzlei
(86) International application number: PCT/JP2014/074461
(87) International publication number: WO 2016/042604

(57) **Abstract**

In a weighing, packaging and pricing apparatus (100), a comparison condition determination unit (153) compares a first expiration date that is the expiration date of perishable food and a second expiration date that is the expiration date of merchandise obtained by processing from the perishable food, and determines whether or not a prescribed condition is satisfied. When the comparison condition determination unit (153) has determined that the prescribed condition is not satisfied, the weighing, packaging and pricing apparatus (100) can detect the occurrence of a state in which consistency is not maintained between the expiration date of the perishable food and the expiration date of the merchandise, and can appropriately manage the expiration date of the merchandise.

## Description

### TECHNICAL FIELD

The present invention relates to a food expiration date management apparatus that manages the expiration dates of merchandise obtained from perishable foods by processing.

### BACKGROUND ART

In recent years, traceability management of perishable foods has been performed in order to ensure food safety. For example, as disclosed in Patent Document 1 (Japanese Laid-open Patent Publication No. 2003-237143), in traceability management to track processes from the disassembly of domestic animals such as live cows to the processing of edible meat, individual identification numbers for domestic animals are used. Individual identification numbers are recorded in ear marks for domestic animals and in RFID tags and the like attached to the dressed carcasses of domestic animals. Domestic animals are disassembled at the slaughterhouse and processed into dressed carcasses, and in a food processing plant the dressed carcasses are separated by region of the domestic animal and processed into cut meat. The cut meat is vacuum-packed and sold at wholesale to a retail establishment such as a supermarket. On a label affixed to the packaging film of the cut meat are printed the name of the place of production of the cut meat, the processing date, a quality retention expiration date, the individual identification number, and other data.

A retail establishment purchases the cut meat and performs processing to obtain merchandise for vending to customers. For example, a person in charge at a retail establishment separates the cut meat and manufactures merchandise such as packed sliced meat. A label on which is printed an expiration date of the merchandise or the like is affixed to the packaging film of the merchandise.

### SUMMARY OF THE INVENTION

### <Technical Problem>

Conventionally, in a retail establishment, the quality retention expiration dates and the like printed on labels of purchased cut meat are periodically confirmed, and expiration dates of cut meat are managed. However, conventionally, when a weighing, packaging and pricing apparatus or the like is used in retail establishments to process cut meat into merchandise such as packed sliced meat, the expiration date of the merchandise and the expiration date of the cut meat are managed separately. Consequently, a situation can occur in which consistency is not maintained between the expiration date of the cut meat and the expiration date of the merchandise. For example, in a case where the expiration date of merchandise is five days later, and the expiration date of the cut meat is three days later, the expiration date displayed on the label of the merchandise is the date after the expiration date of the cut meat. In this case, at the time of processing of the cut meat into the merchandise, the expiration date of the cut meat has not yet elapsed, but there is a concern that at the time the merchandise is consumed, the expiration date of the cut meat may have elapsed. Accordingly, even before the merchandise expiration date, merchandise that uses cut meat of which the expiration date has passed is consumed, and there is the possibility of occurrence of a serious problem relating to food safety.

An object of the present invention is to provide a food expiration date management apparatus that can appropriately manage expiration dates of foods.

### <Solution to Problem>

A food expiration date management apparatus according to a first aspect of the present invention is a food expiration date management apparatus that manages the expiration dates of merchandise obtained by processing perishable food. The food expiration date management apparatus is provided with an acquisition unit, a generation unit, and a determination unit. The acquisition unit is configured to acquire a first expiration date, which is the expiration date of the perishable food. The generation unit is configured to generate a second expiration date, which is the expiration date of the merchandise. The determination unit is configured to compare the first expiration date and the second expiration date, and determines whether or not a prescribed condition is satisfied.

The aforedescribed food expiration date management apparatus compares the expiration date of a perishable food and the expiration date of merchandise processed from the perishable food. The perishable food is an agricultural product, an animal product, or a marine product made of a single material. For example, in the case of an animal product, the perishable food is a dressed carcass or cut meat. Processing is a manufacturing process to change only the form, and does not change the essence of the perishable food. An expiration date is a used-by date or a best-before date. A used-by date is an expiration date for maintaining a safe state for eating if the packaging has not been opened and the food has been preserved according to a preservation method displayed on a label or the like. A best-before date is an expiration date for maintaining a state of satisfactory taste if the packaging has not been opened and the food has been preserved according to a preservation method displayed on a label or the like.

The food expiration date management apparatus can detect the occurrence of a situation in which consistency is not maintained between the expiration date of a perishable food and the expiration date of merchandise. Accordingly, the food expiration date management apparatus can appropriately manage the expiration dates of merchandise.

A food expiration date management apparatus according to a second aspect of the present invention is the food expiration date management apparatus according to the first aspect, wherein the determination unit is configured to determine that the prescribed condition is not satisfied if the first expiration date is before the second expiration date. Moreover, the food expiration date management apparatus is further provided with a modification unit. The modification unit is configured to automatically modify the second expiration date to the first expiration date if the prescribed condition is not satisfied.

In the aforedescribed food expiration date management apparatus, if a situation occurs in which consistency is clearly not maintained between the expiration date of a perishable food and the expiration date of merchandise, the expiration date of the merchandise is automatically modified. Accordingly, the food expiration date management apparatus can prevent erroneous setting of the expiration date of merchandise, and can appropriately manage the expiration dates of merchandise.

A food expiration date management apparatus according to a third aspect of the present invention is the food expiration date management apparatus according to the first aspect, further provided with an issuing unit is configured to issue labels to be affixed to merchandise. Further, the determination unit is configured to determine that the prescribed condition is not satisfied if a first expiration date is before a second expiration date. Moreover, the issuing unit is configured to stop the issuing of labels if the prescribed condition is not satisfied.

In the aforedescribed food expiration date management apparatus, if a situation occurs in which consistency is clearly not maintained between the expiration date of a perishable food and the expiration date of merchandise, issuing of a label to be affixed to the merchandise is stopped. Accordingly, the food expiration date management apparatus can prevent the affixing to merchandise of labels on which an inappropriate expiration date is printed, and can appropriately manage the expiration dates of merchandise.

A food expiration date management apparatus according to a fourth aspect of the present invention is the food expiration date management apparatus according to the first aspect, wherein the determination unit is configured to determine that the prescribed condition is not satisfied if the first expiration date is before the second expiration date. Moreover, the food expiration date management apparatus is further provided with a warning unit. The warning unit is configured to issue a warning if the prescribed condition is not satisfied.

If a situation occurs in which consistency is clearly not maintained between the expiration date of a perishable food and the expiration date of merchandise, the aforedescribed food expiration date management apparatus warns an operator of this fact and prompts the attention of the operator, so that errors in expiration date management can be reduced.

A food expiration date management apparatus according to a fifth aspect of the present invention is the food expiration date management apparatus according to any one of the first to the fourth aspects, wherein the determination unit is configured to determine whether or not the time period until the first expiration date is shorter than a prescribed time period. Moreover, the food expiration date management apparatus is further provided with a prohibition unit. The prohibition unit is configured to prohibit processing of perishable food if the determination unit has determined that the time period until the first expiration date is shorter than the prescribed time period.

Even if, for example, consistency is maintained between the expiration date of a perishable food and the expiration date of merchandise, the aforedescribed food expiration date management apparatus can prohibit processing of the perishable food into merchandise with the rationale being that the time period until the expiration date of the perishable food is shorter than the prescribed time period, and the expiration date of the perishable food is close. Accordingly, by prohibiting the manufacture of merchandise processed from perishable food whose expiration date is close, the food expiration date management apparatus can appropriately manage the expiration dates of merchandise.

### <Advantageous Effects of Invention>

The food expiration date management apparatus of the present invention can appropriately manage the expiration dates of food.

### BRIEF DESCRIPTION OF THE DRAWINGS

FIG. 1 is a front view of a weighing, packaging and pricing apparatus according to an embodiment of the present invention;
FIG. 2 is a cross-sectional view of the weighing, packaging and pricing apparatus;
FIG. 3 is a block configuration diagram of the weighing, packaging and pricing apparatus;
FIG. 4 is a drawing showing an example of a label for cut meat;
FIG. 5 is a block configuration diagram relating to functions for managing the expiration dates of dressed meat merchandise;
FIG. 6 is the first half of a flowchart of processing to manage the expiration dates of dressed meat merchandise;
FIG. 7 is the second half of a flowchart of processing to manage the expiration dates of dressed meat merchandise;
FIG. 8 is a block configuration diagram relating to functions for managing the expiration dates of dressed meat merchandise in Modification A;
FIG. 9 is a flowchart of processing to manage expiration dates of dressed meat merchandise in Modification A;
FIG. 10 is a block configuration diagram relating to functions for managing the expiration dates of dressed meat merchandise in Modification B;
FIG. 11 is a flowchart of processing to manage expiration dates of dressed meat merchandise in Modification B;
FIG. 12 is the first half of a flowchart of processing to manage the expiration dates of dressed meat merchandise in Modification C; and,
FIG. 13 is the second half of a flowchart of processing to manage the expiration dates of dressed meat merchandise in Modification C.

### DESCRIPTION OF EMBODIMENTS

The food expiration date management apparatus pertaining to an embodiment of the present invention is described with reference to the accompanying drawings. The embodiment explained below is merely one specific example of the invention of the present application, and does not limit the technical scope of the present invention.

The food expiration date management apparatus is used in retail establishments that process perishable foods for vending as merchandise, such as supermarkets and butcher shops. In retail establishments, the food expiration date management apparatus is used to manage expiration dates of merchandise processed from perishable foods.

In the present embodiment, the perishable food is an agricultural product, an animal product, or a marine product, made of a single material. Specifically, the perishable food is a food that is classified as a "perishable food" in the Quality Labelling Standard for Perishable Foods based on the JAS Law, and includes agricultural products, animal products, and marine products that are merely cut, refrigerated and/or frozen. For example, if a perishable food is an animal product, it might be the dressed carcass or cut meat of live cows.

In the present embodiment, processing is a step that does not change the essence of the perishable food itself, but only changes the form of the perishable food. Specifically, processing includes cutting of perishable foods, but does not include heating, drying, fermenting, or the like of perishable foods. For example, a step of cutting apart the cut meat of live cows corresponds to processing.

In the present embodiment, an expiration date is a used-by date or a best-before date. A used-by date is an expiration date for maintaining a safe state for eating if the packaging has not been opened and the food has been preserved according to a preservation method displayed on a label or the like. A best-before date is an expiration date for maintaining a state of satisfactory taste if the packaging has not been opened and the food has been preserved according to a preservation method displayed on a label or the like. In the present embodiment, the initial date in reckoning an expiration date does not change due to processing. That is, the initial date in reckoning an expiration date of merchandise that has been processed from perishable food is the same as the initial date in reckoning the expiration date of the perishable food before processing. The initial date in reckoning an expiration date is the date used as reference to set an expiration date. For example, an expiration date may be set to the date one week after the initial date in reckoning.

Hereinafter, a weighing, packaging and pricing apparatus 100 is described as a food expiration date management apparatus according to the present embodiment. The weighing, packaging and pricing apparatus 100 is used by a person in charge at a meat section in a supermarket. The person in charge processes the cut meat of live cows, which is perishable food, to obtain dressed meat such as sliced meat, and uses the weighing, packaging and pricing apparatus 100 to manufacture dressed-meat merchandise that is dressed meat package merchandise.

### (1) Summary of processing from live cows to dressed meat merchandise

First, a summary of processing from live cows to dressed meat merchandise is described. Live cows are raised on a ranch that is the production site until they can be used as meat. Individual identification numbers are imparted to live cows. For example, ear marks that represent the individual identification number as a barcode are attached to the ears of live cows. Individual identification numbers are, for example, 10-digit numbers that combine a number unique to the ranch that is the place of production of the live cow, and a number that is allocated to each cow, without overlap, at each place of production. The producer of the live cow uses the individual identification numbers to manage the date of birth, date of purchase, and other raising information and the like for each live cow. Individual identification numbers are used in traceability management to specify live cows in each stage, from live cows until processing into dressed meat merchandise.

Live cows shipped from a ranch are slaughtered and disassembled in a slaughterhouse and are processed into dressed carcasses corresponding to left and right halves of bodies. RFID tags are attached on dressed carcasses. The individual identification numbers of live cows are read out from ear marks of live cows by a barcode reader or the like, and are recorded in RFID tags attached to the dressed carcasses corresponding to the live cows. Expiration dates for dressed carcasses are also recorded in the RFID tags. Expiration dates for dressed carcasses are, for example, generated from the date of processing of the live cow.

In a food processing plant, a dressed carcass is cut apart into regions of the live cow such as the shoulders or fillet, for processing into cut meat corresponding to each region. Cut meat is packaged with film and vacuum-packed. The vacuum-packed cut meat is weighed, and a label for the cut meat, on which is printed various information, is affixed. On the label for the cut meat are printed a barcode that records the individual identification information, a barcode that records as numerical value information the cut meat processing date, expiration date and the like, and a text string representing the cut meat processing date, expiration date and the like. The cut meat processing date is the date of processing from a dressed carcass into cut meat. The expiration date of the cut meat is the expiration date of the dressed carcass, read out from the RFID tag attached to the dressed carcass.

The vacuum-packed cut meat is sold at wholesale to a supermarket. In a meat section of the supermarket, the cut meat is processed into various forms of dressed meat, such as sliced meat. Dressed meat is placed on a tray, and, after being weighed using the weighing, packaging and pricing apparatus 100, is packaged with packaging film. A price label is affixed to the packaging film, and the resulting product is sold to a customer at the store as dressed meat merchandise. On the price label are printed the weight, the price, the expiration date and the like of the weighed dressed meat. As stated below, the expiration date of the dressed meat merchandise is generated by the weighing, packaging and pricing apparatus 100 according to the present embodiment.

### (2) Configuration of the weighing, packaging and pricing apparatus

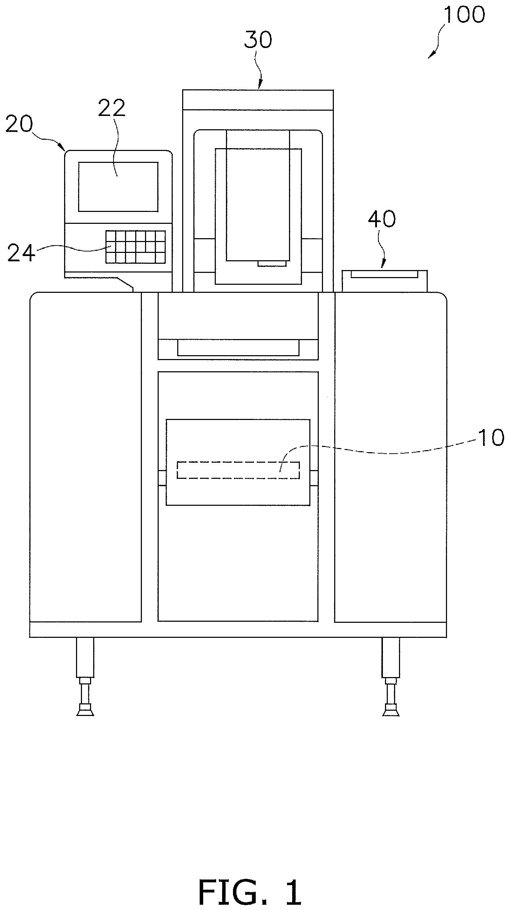

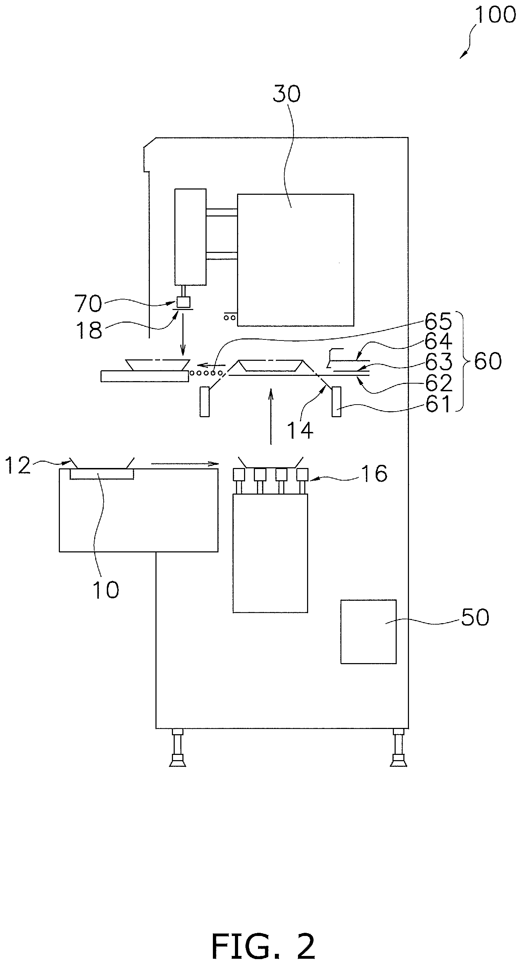

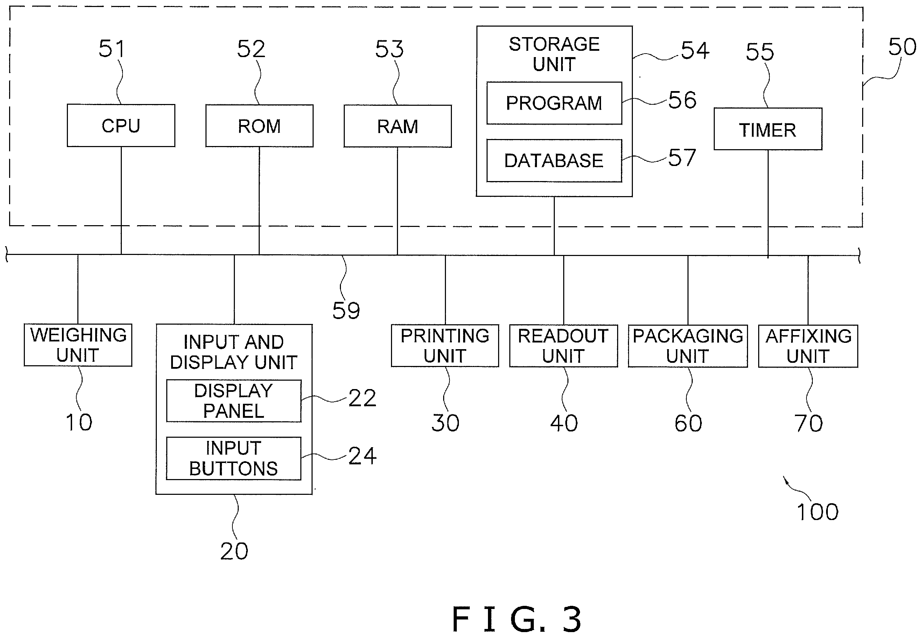

Next, the weighing, packaging and pricing apparatus 100 is described. FIG. 1 is a front view of the weighing, packaging and pricing apparatus 100. FIG. 2 is a cross-sectional view of the weighing, packaging and pricing apparatus 100. FIG. 3 is a block configuration diagram of the weighing, packaging and pricing apparatus 100. The weighing, packaging and pricing apparatus 100 principally performs weighing of dressed meat that has been processed from cut meat, which is a perishable food; packaging of dressed meat using packaging film; and pricing in which the weight, the expiration date, the retail price and the like of the weighed dressed meat are printed onto a label and the label is affixed to the packaging film.

The weighing, packaging and pricing apparatus 100 is principally provided with a weighing unit 10, an input and display unit 20, a printing unit 30, a readout unit 40, a control unit 50, a packaging unit 60, and an affixing unit 70.

The weighing unit 10 weighs an article placed thereupon. A person in charge at the meat section processes cut meat into dressed meat, and places a prescribed amount of the dressed meat on a tray 12. The weighing unit 10 measures the weight of the dressed meat placed on the tray 12, and acquires data relating to the weight of the dressed meat.

The input and display unit 20 is principally provided with a display panel 22 and input buttons 24. The display panel 22 is, for example, a liquid crystal display apparatus. The display panel 22 displays an operation menu image for the weighing, packaging and pricing apparatus 100, data recorded in the weighing, packaging and pricing apparatus 100, data relating to the operating state of the weighing, packaging and pricing apparatus 100, and the like. The input buttons 24 are configured from numeric keys and other keys. An operator of the weighing, packaging and pricing apparatus 100 can press keys among the input buttons 24 while viewing the display panel 22 to weigh dressed meat, display and register various data, execute label printing, and perform other actions. The input and display unit 20 may be a touch panel having the functions of both the display panel 22 and the input buttons 24.

The printing unit 30 is a thermal head or the like for printing a price label 18 to be affixed to the packaging film 14 of merchandise. On a price label 18 are printed the name of the dressed meat ("sliced meat" or the like), the name of the region of the cut meat, which is the origin of the dressed meat ("thigh" or the like), the weight of the weighed dressed meat, the unit price, which is the price per unit weight of the dressed meat, the sales price, which is calculated from the weighed weight and the unit price, the processing date, the expiration date and preservation method, and the like. A price label 18 printed by the printing unit 30 is affixed to a label mount.

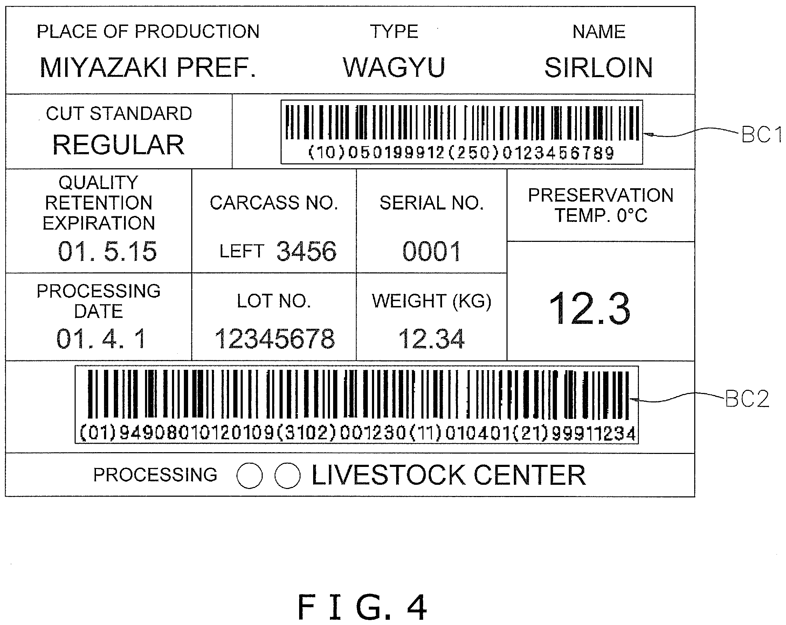

The readout unit 40 reads out a barcode printed on a label for cut meat that is attached to the packaging film of cut meat that is the origin of dressed meat. FIG. 4 is a drawing showing an example of a label for cut meat. On the label for cut meat shown in FIG. 4 are printed a barcode BC1 in the upper half and a barcode BC2 in the lower half. The barcode BC1 in the upper half records the individual identification number. The barcode BC2 in the lower half records, as numerical information, the weight of the cut meat, the date of processing into cut meat, the expiration date of the cut meat, and the like. The readout unit 40 is an apparatus that has the functions of a barcode reader for reading out data from the barcodes BC1 and BC2. The readout unit 40 is connected, wirelessly or by wire, to the main unit of the weighing, packaging and pricing apparatus 100.

The control unit 50 is a computer that is principally provided with a CPU 51, ROM 52, RAM 53, storage unit 54, and timer 55. The components of the control unit are interconnected via a bus 59. The control unit 50 is connected to the weighing unit 10, input and display unit 20, printing unit 30, readout unit 40, packaging unit 60, and affixing unit 70. The storage unit 54 is, for example, an HDD or an SSD which is non-volatile memory devices. The storage unit 54 principally stores various programs 56 for execution of various operations of the weighing, packaging and pricing apparatus 100, and a database 57 in which are registered information that can be acquired from labels for cut meat, information printed on price labels 18, and the like. The timer 55 is an electronic component for acquisition of the current time, an elapsed time, and the like. The timer 55 is used in various operations such as management of expiration dates of dressed meat merchandise.

The packaging unit 60 has a function for packaging the tray 12 on which is placed the dressed meat using the packaging film 14. As shown in FIG. 2, the packaging unit 60 is principally provided with a transport mechanism 61, a pair of right- and left-folding plates 62, a rear-folding plate 63, a pusher 64, and a heat-sealing conveyor 65. The tray 12 that has been weighed by the weighing unit 10 moves to the right side in FIG. 2 and is placed on a lifter 16. At this time, packaging film 14 is stretched above the tray 12 on the lifter 16 by the transport mechanism 61. In this state, the lifter 16 moves the tray 12 upward. As a result, the packaging film 14 is in a state of covering the upper face of the tray 12, and closely adheres to the peripheral edges of the tray 12. Next, the pair of right- and left-folding plates 62, the rear-folding plate 63, the pusher 64 and the like cause the four edge parts of the packaging film 14 to be folded below the tray 12. Next, the heat-sealing conveyor 65 causes the four edge parts of the packaging film 14, which is folded and overlapping on the lower-face side of the tray 12, to be heat-sealed mutually. Through the above step, the packaging unit 60 uses the packaging film 14 to package the tray 12 on which the dressed meat is placed.

The affixing unit 70 affixes a price label 18 printed by the printing unit 30 on the packaging film 14 that packages the tray 12 on which the dressed meat is placed. The affixing unit 70 separates the price label 18 from the label mount and affixes the price label 18 to the packaging film 14 on the upper-face side of the tray 12.

### (3) Management of expiration dates by the weighing, packaging and pricing apparatus

Before processing cut meat into dressed meat merchandise, the person in charge at the meat section of the supermarket uses the readout unit 40 of the weighing, packaging and pricing apparatus 100 to read various information from the label for cut meat attached to the cut meat into the weighing, packaging and pricing apparatus 100. The read-in information is the information recorded in the barcodes BC1 and BC2 printed on the label for cut met, shown in FIG. 4. These items of information are registered in the database 57 of the weighing, packaging and pricing apparatus 100. Information read out from labels for cut meat and registered in the database 57 includes the individual identification number, weight of the cut meat, date of processing into cut meat, expiration date of the cut meat, and the like. The individual identification number and the expiration date of the cut meat are data inherited from the RFID tag that had been attached to the dressed carcass that is the origin of the cut meat. Through the above operations as performed by the operator of the weighing, packaging and pricing apparatus 100 using the readout unit 40, the cut meat that is the origin of dressed meat merchandise manufactured by the weighing, packaging and pricing apparatus 100 is specified. The operator of the weighing, packaging and pricing apparatus 100 places dressed meat processed from the specified cut meat into a tray 12, and places the tray 12 with the dressed meat on the weighing unit 10. The weighing, packaging and pricing apparatus 100 weighs and packages the tray 12 and affixes a price label 18 to manufacture dressed meat merchandise. Hereinafter, management of the expiration date of dressed meat merchandise by the weighing, packaging and pricing apparatus 100 is described.

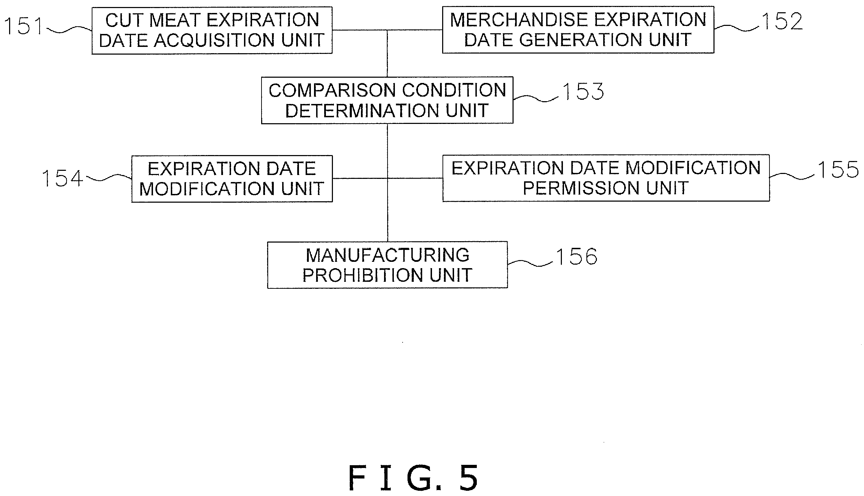

The storage unit 54 of the control unit 50 stores an expiration date management program that is a program 56 for managing the expiration date of dressed meat merchandise. FIG. 5 is a block configuration diagram of the expiration date management program. The expiration date management program has a cut meat expiration date acquisition unit 151, a merchandise expiration date generation unit 152, a comparison condition determination unit 153, an expiration date modification unit 154, an expiration date modification permission unit 155, and a manufacturing prohibition unit 156. The expiration date management program is executed at a time at which cut meat that is the origin of dressed meat merchandise manufactured by the weighing, packaging and pricing apparatus 100 is specified. As explained below, the expiration date management program uses an automatic effective date adjustment function flag and an effective date adjustment selection function flag. The states of these flags are stored in the storage unit 54.

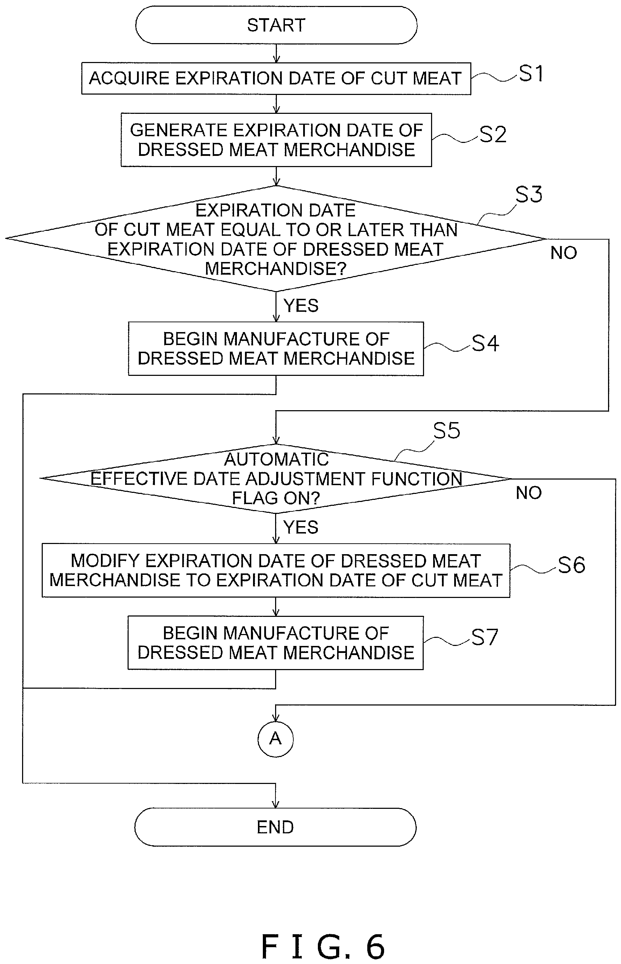

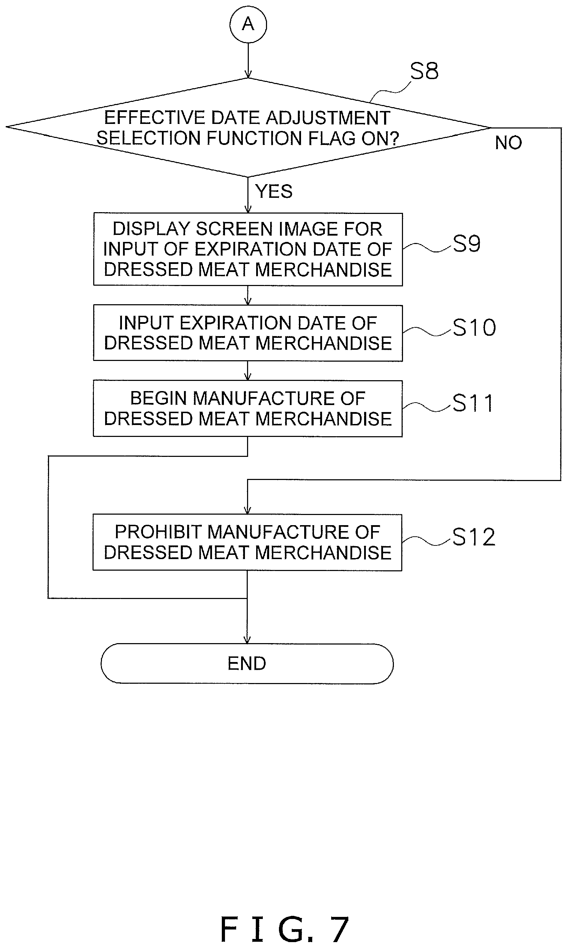

FIG. 6 and FIG. 7 are flowcharts representing the actions performed by the expiration date management program. First, in step S1 the cut meat expiration date acquisition unit 151 acquires the expiration date of the cut meat from the database 57. Next, in step S2 the merchandise expiration date generation unit 152 generates an expiration date of dressed meat merchandise. For example, the merchandise expiration date generation unit 152 calculates an expiration date of dressed meat merchandise on the basis of the current date acquired from the timer 55 of the control unit 50 and data relating to the expiration date of dressed meat merchandise, registered in advance in the database 57. Data relating to the expiration date of dressed meat merchandise is, for example, data relating to the time period from the date on which cut meat was processed into dressed meat merchandise to the expiration date of the dressed meat merchandise. Specifically, if the current date which is the date on which cut meat is processed into dressed meat merchandise is August 1, 2014, and the expiration date of dressed meat merchandise has been set to four days after the processing date, then the merchandise expiration date generation unit 152 generates August 5, 2014 as the expiration date of the dressed meat merchandise. The merchandise expiration date generation unit 152 may also acquire an expiration date of dressed meat merchandise that has been registered in advance in the database 57.

Next, in step S3 the comparison condition determination unit 153 determines whether or not the cut meat expiration date acquired by the cut meat expiration date acquisition unit 151 and the dressed meat merchandise expiration date acquired by the merchandise expiration date generation unit 152 satisfy a prescribed comparison condition. The comparison condition is a condition relating to whether or not consistency is maintained between the cut meat expiration date and the expiration date of the dressed meat merchandise. If the comparison condition is satisfied, then consistency is maintained between the cut meat expiration date and the expiration date of the dressed meat merchandise. If the comparison condition is not satisfied, consistency is not maintained between the cut meat expiration date and the expiration date of the dressed meat merchandise.

In the present embodiment, the comparison condition is a condition relating to whether the cut meat expiration date is equal to or later than the expiration date of the dressed meat merchandise. If the cut meat expiration date is equal to or later than the expiration date of the dressed meat merchandise, the comparison condition determination unit 153 determines that the comparison condition is satisfied. If the cut meat expiration date is before the expiration date of the dressed meat merchandise, the comparison condition determination unit 153 determines that the comparison condition is not satisfied.

If it is determined that the comparison condition is satisfied, then a date that maintains consistency with the cut meat expiration date has been set for the expiration date of the dressed meat merchandise, and in step S4, the control unit 50 begins manufacture of the dressed meat merchandise.

If it is determined that the comparison condition is not satisfied, then a date that does not maintain consistency with the cut meat expiration date has been set for the expiration date of the dressed meat merchandise, and the following actions are performed.

First, in step S5 the control unit 50 determines whether or not the automatic effective date adjustment function flag is on. The automatic effective date adjustment function flag is set in advance by an operator of the weighing, packaging and pricing apparatus 100, and is stored in the storage unit 54. If the automatic effective date adjustment function flag is on, then in step S6 the expiration date modification unit 154 modifies the expiration date of the dressed meat merchandise to the cut meat expiration date. By this modification, consistency is maintained between the cut meat expiration date and the expiration date of the dressed meat merchandise, and therefore in step S7 the control unit 50 begins manufacture of the dressed meat merchandise.

If the automatic effective date adjustment function flag is off, in step S8 the control unit 50 determines whether or not the effective date adjustment selection function flag is on. The effective date adjustment selection function flag is set in advance by an operator of the weighing, packaging and pricing apparatus 100, and is stored in the storage unit 54. If the effective date adjustment selection function flag is on, in step S9 the expiration date modification permission unit 155 displays a screen image for input of an expiration date of dressed meat merchandise on the display panel 22 of the input and display unit 20. Next, in step S10 the operator of the weighing, packaging and pricing apparatus 100 operates input buttons 24 of the input and display unit 20 to input an expiration date of dressed meat merchandise. Dates that can be input by the operator are dates that satisfy the comparison condition, that is, dates equal to or before the cut meat expiration date. Through input by the operator of an expiration date of dressed meat merchandise, consistency is maintained between the cut meat expiration date and the expiration date of the dressed meat merchandise, and therefore in step S11 the control unit 50 begins manufacture of dressed meat merchandise.

If the effective date adjustment selection function flag is off, in step S12 the manufacturing prohibition unit 156 prohibits the manufacture of dressed meat merchandise by the weighing, packaging and pricing apparatus 100. Specifically, the manufacturing prohibition unit 156 controls the weighing unit 10, printing unit 30, packaging unit 60, affixing unit 70 and the like, and stops the manufacture of dressed meat merchandise by the weighing, packaging and pricing apparatus 100.

### (4) Features of the weighing, packaging and pricing apparatus

The weighing, packaging and pricing apparatus 100 according to the present embodiment can acquire the expiration date of cut meat that is to be the origin of dressed meat merchandise, and moreover can generate an expiration date of the dressed meat merchandise. That is, the weighing, packaging and pricing apparatus 100 can store both the cut meat expiration date and the expiration date of the dressed meat merchandise. Accordingly, the weighing, packaging and pricing apparatus 100 can compare the cut meat expiration date and the expiration date of the dressed meat merchandise, and can detect the fact that consistency is not maintained between the two. Accordingly, the weighing, packaging and pricing apparatus 100 can appropriately manage the expiration date of merchandise processed from perishable foods.

Further, if consistency is not maintained between the cut meat expiration date and the expiration date of the dressed meat merchandise, the weighing, packaging and pricing apparatus 100 can automatically modify the expiration date of the dressed meat merchandise. Specifically, the weighing, packaging and pricing apparatus 100 stores the expiration date of cut meat that is the origin of dressed meat merchandise at the time of manufacture of the dressed meat merchandise, and therefore can automatically modify the expiration date of the dressed meat merchandise to the expiration date of the cut meat. Accordingly, the weighing, packaging and pricing apparatus 100 can prevent erroneous setting of the expiration date of merchandise processed from perishable food, and can appropriately manage the expiration dates of merchandise.

Further, if consistency is not maintained between the cut meat expiration date and the expiration date of the dressed meat merchandise, the weighing, packaging and pricing apparatus 100 can instruct an operator to set an expiration date of the dressed meat merchandise. The operator can set the expiration date of the dressed meat merchandise so as to maintain consistency between the cut meat expiration date and the expiration date of the dressed meat merchandise. Accordingly, the weighing, packaging and pricing apparatus 100 can prevent erroneous settings of the expiration date of merchandise processed from perishable food, and can appropriately manage the expiration dates of merchandise.

Further, if consistency is not maintained between the cut meat expiration date and the expiration date of dressed meat merchandise, the weighing, packaging and pricing apparatus 100 can prohibit the manufacture of the dressed meat merchandise. Consequently, the weighing, packaging and pricing apparatus 100 can prevent the manufacture of dressed meat merchandise for which a date later than the expiration date of the cut meat that is to become the origin of the dressed meat merchandise is set as the expiration date. Accordingly, the weighing, packaging and pricing apparatus 100 can prevent the occurrence of serious problems relating to the safety of food when merchandise processed from perishable food the expiration date of which has elapsed is consumed.

### (5) Modifications

An embodiment of the present invention is described above, but the specific configuration of the present invention can be modified without deviating from the main point of the present invention. Next, modifications that can be applied to the present embodiment are described.

### (5-1) Modification A

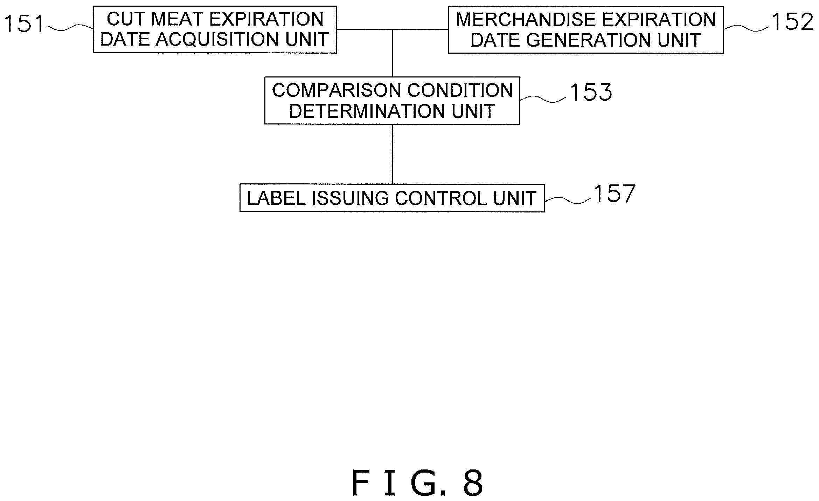

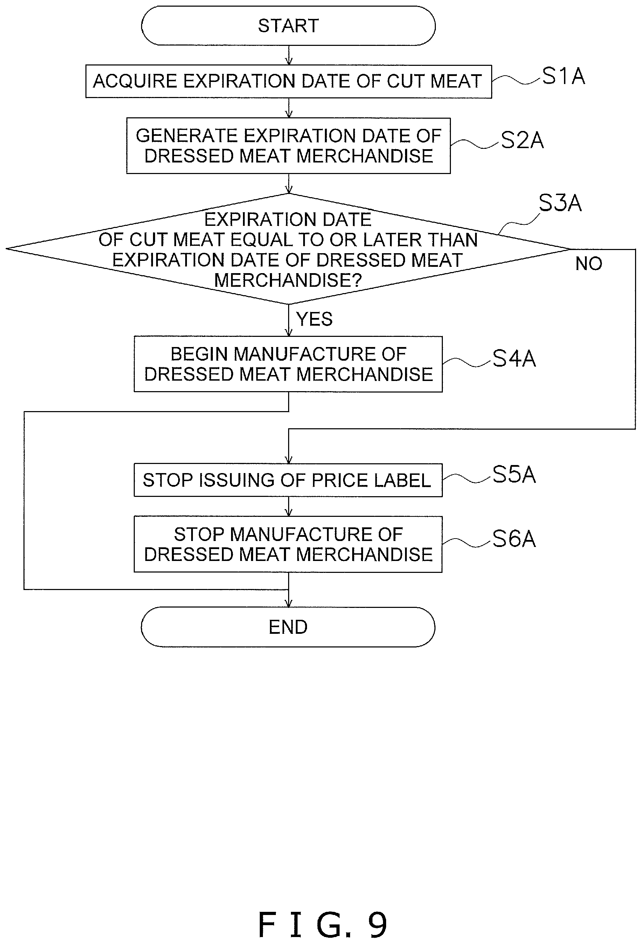

In the embodiment, the expiration date management program used by the weighing, packaging and pricing apparatus 100 has an expiration date modification unit 154, an expiration date modification permission unit 155, and a manufacturing prohibition unit 156. However, in place of the expiration date modification unit 154, expiration date modification permission unit 155 and manufacturing prohibition unit 156, the expiration date management program may have a label issuing control unit 157. FIG. 8 is a block configuration diagram of the expiration date management program of the present modification. FIG. 9 is a flowchart that represents the processes performed by the expiration date management program in the present modification. Steps S1A to S4A shown in FIG. 9 respectively represent the same processes as in steps S1 to S4 shown in FIG. 6.

In the present modification, if it is determined in step S3A that the comparison condition is not satisfied, in step S5A the label issuing control unit 157 stops issuing the price labels 18. Specifically, the label issuing control unit 157 causes printing of pricing labels 18 by the printing unit 30 to be stopped. As a result, the weighing, packaging and pricing apparatus 100 can no longer manufacture dressed meat merchandise with pricing labels 18 affixed. Accordingly, in the next step S6A, the control unit 50 of the weighing, packaging and pricing apparatus 100 stops manufacture of dressed meat merchandise by the weighing, packaging and pricing apparatus 100.

Consequently, the weighing, packaging and pricing apparatus 100 of the present modification can prevent the affixing to merchandise processed from perishable food of labels on which are printed inappropriate expiration dates, and can appropriately manage the expiration dates of merchandise.

### (5-2) Modification B

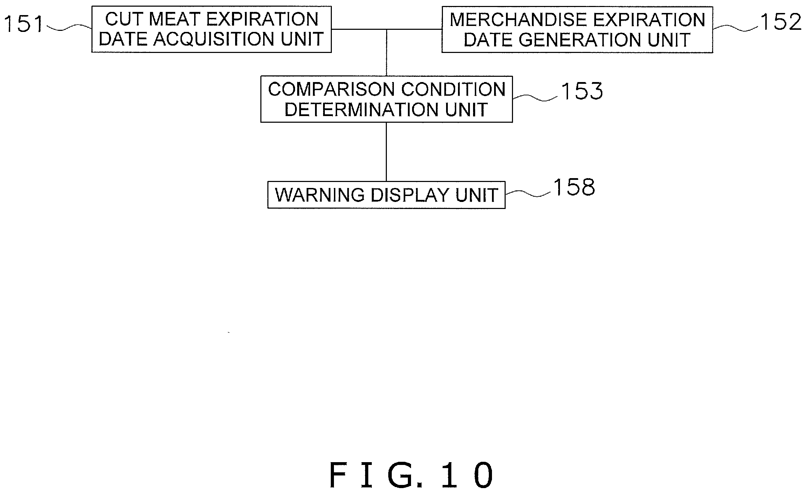

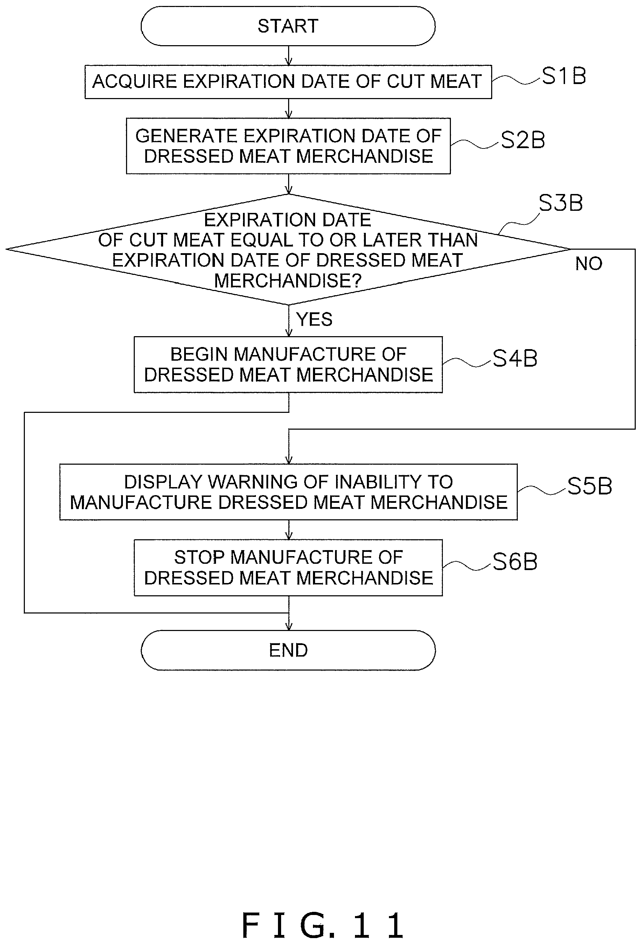

In the embodiment, the expiration date management program used by the weighing, packaging and pricing apparatus 100 has an expiration date modification unit 154, an expiration date modification permission unit 155, and a manufacturing prohibition unit 156. However, in place of the expiration date modification unit 154, expiration date modification permission unit 155 and manufacturing prohibition unit 156, the expiration date management program may have a warning display unit 158. FIG. 10 is a block configuration diagram of the expiration date management program in the present modification. FIG. 11 is a flowchart that represents the actions performed by the expiration date management program in the present modification. Steps S1 B to S4B shown in FIG. 11 respectively represent the same actions as in steps S1 to S4 shown in FIG. 6.

In the present modification, if in step S3B it is determined that the comparison condition is not satisfied, in step S5B the warning display unit 158 displays, on the display panel 22 of the input and display unit 20, a warning of the fact that manufacture of dressed meat merchandise is not possible. Next, in step S6B the control unit 50 of the weighing, packaging and pricing apparatus 100 stops the manufacture of dressed meat merchandise by the weighing, packaging and pricing apparatus 100.

Consequently, if consistency is not maintained between the expiration date of perishable food and the expiration date of merchandise processed from the perishable food, the weighing, packaging and pricing apparatus 100 of the present modification warns an operator of the fact and alerts the attention of the operator, allowing errors in expiration date management to be reduced.

### (5-3) Modification C

In the embodiment, if the cut meat expiration date is equal to or later than the expiration date of the dressed meat merchandise, the comparison condition determination unit 153 determines that consistency is not maintained between the cut meat expiration date and the expiration date of the dressed meat merchandise. However, if the cut meat expiration date is not equal to or later than the expiration date of the dressed meat merchandise, the comparison condition determination unit 153 may further compare the time period from the current date until the cut meat expiration date with a prescribed time period to manage the expiration date of the dressed meat merchandise. Below, the prescribed time period is assumed to be three days.

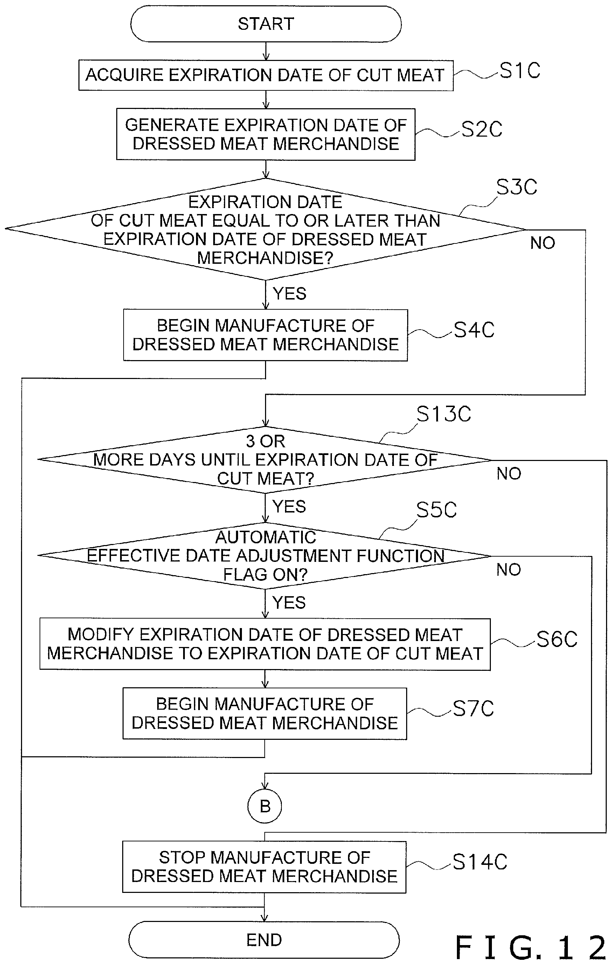

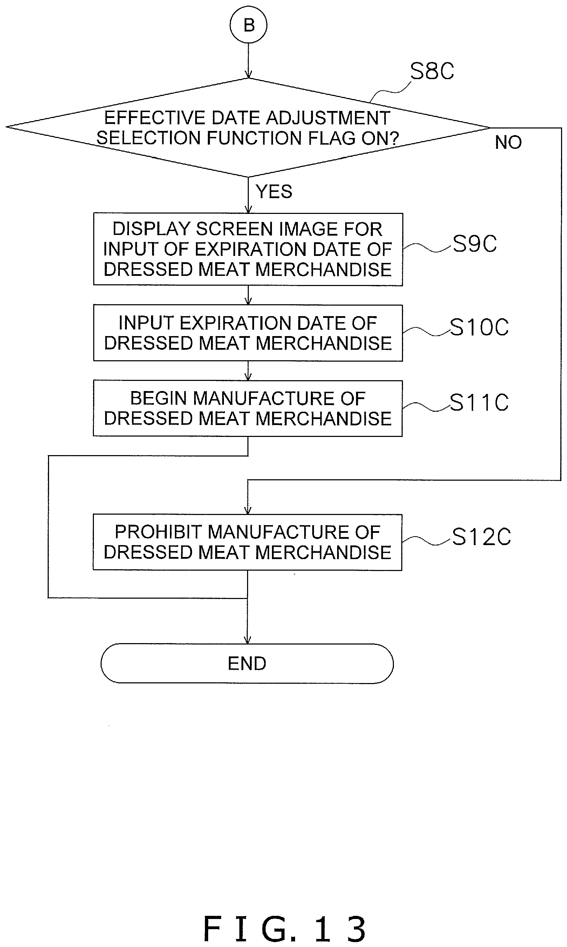

FIG. 12 and FIG. 13 are flowcharts representing actions executed by the comparison condition determination unit 153 in the present modification. Steps S1C to S12C shown in FIG. 12 and FIG. 13 represent the same actions respectively as those of steps S1 to S12 shown in FIG. 6 and FIG. 7. A difference between FIG. 12 and FIG. 13 on the one hand and FIG. 6 and FIG. 7 on the other is the presence of steps S13C and S14C which are actions between step S3C and step S5C in FIG. 12.

As shown in FIG. 12, if in step S3C it is determined that the cut meat expiration date is equal to or later than the expiration date of the dressed meat merchandise, then in step S13C the comparison condition determination unit 153 determines whether the number of days from the current date until the cut meat expiration date is at least three days, which is the prescribed time period.

If the number of days until the cut meat expiration date is at least three days, processing advances to step S5C. If the number of days until the cut meat expiration date is less than three days, in step S14C the manufacturing prohibition unit 156 prohibits manufacturing of dressed meat merchandise by the weighing, packaging and pricing apparatus 100. As a result, the weighing, packaging and pricing apparatus 100 can prevent the manufacture of dressed meat merchandise that is manufactured from cut meat the number of days until the expiration date of which is shorter than the prescribed time period.

Consequently, even if consistency is maintained between the expiration date of perishable food and the expiration date of merchandise processed from the perishable food, the weighing, packaging and pricing apparatus 100 of the present modification can prohibit processing of the perishable food for the reason that the time period until the expiration date of the perishable food is shorter than a prescribed time period and the expiration date of the perishable food is close. Consequently, the weighing, packaging and pricing apparatus 100 can appropriately manage the expiration dates of merchandise.

### (5-4) Modification D

In the embodiment, the comparison condition determination unit 153 determines whether or not the cut meat expiration date is equal to or later than the expiration date of the dressed meat merchandise on the basis of a comparison condition. However, the comparison condition determination unit 153 may make a determination on the basis of another comparison condition relating to the cut meat expiration date and the expiration date of the dressed meat merchandise.

For example, the comparison condition determination unit 153 may determine that the comparison condition is satisfied if the cut meat expiration date is equal to or later than three days after the expiration date of the dressed meat merchandise. In this case, the weighing, packaging and pricing apparatus 100 can prohibit the manufacture of dressed meat merchandise set to an expiration date that is equal to or before the cut meat expiration date, but set to an expiration date that is close to the cut meat expiration date.

A purchaser of dressed meat merchandise may consume the dressed meat merchandise without discarding even after the expiration date of the purchased dressed meat merchandise has elapsed. Accordingly, if, for example, the expiration date of the dressed meat merchandise is the same as the expiration date of the cut meat that is the origin thereof, and dressed meat merchandise the expiration date of which has elapsed is consumed, then dressed meat merchandise manufactured from cut meat having an elapsed expiration date will be consumed. In order to prevent such consumption, it is preferable that a prescribed time period be provided between the cut meat expiration date and the expiration date of the dressed meat merchandise. In the present modification, by setting the comparison condition used by the comparison condition determination unit 153 as described above, the manufacture of dressed meat merchandise for which an expiration date close to the cut meat expiration date has been set is prohibited, and the occurrence of serious problems relating to the safety of food can be prevented.

### (5-5) Modification E

In the embodiment, the states of the automatic effective date adjustment function flag and the effective date adjustment selection function flag are set in advance by the operator of the weighing, packaging and pricing apparatus 100, and are stored in the storage unit 54. However, the states of the flags can be set as necessary by the operator of the weighing, packaging and pricing apparatus 100 through the input and display unit 20.

Specifically, in step S5 of the flowchart shown in FIG. 6, the control unit 50 may display, on the display panel 22 of the input and display unit 20, a screen image for setting the automatic effective date adjustment function flag. The operator of the weighing, packaging and pricing apparatus 100 operates the input buttons 24 of the input and display unit 20 to set the automatic effective date adjustment function flag.

Similarly, in step S8 of the flowchart shown in FIG. 7, the control unit 50 may display, on the display panel 22 of the input and display unit 20, a screen image for setting the effective date adjustment selection function flag. The operator of the weighing, packaging and pricing apparatus 100 operates the input buttons 24 of the input and display unit 20 to set the effective date adjustment selection function flag.

As a result, the operator of the weighing, packaging and pricing apparatus 100 can select a specific countermeasure relating to the expiration date of dressed meat merchandise for every occasion where consistency is not maintained between a cut meat expiration date and the expiration date of dressed meat merchandise, so that the expiration dates of dressed meat merchandise can be managed appropriately.

### (5-6) Modification F

In the embodiment, the expiration dates of cut meat that is the origin of dressed meat merchandise are registered in the weighing, packaging and pricing apparatus 100. The weighing, packaging and pricing apparatus 100 compares the expiration dates of cut meat and the expiration dates of dressed meat merchandise. However, after acquiring an expiration date of cut meat, the weighing, packaging and pricing apparatus 100 may perform a further action to compare the cut meat expiration date with the current date. In this case, if the cut meat expiration date is before the current date, the weighing, packaging and pricing apparatus 100 prohibits the manufacture of dressed meat merchandise from the cut meat. As a result, the weighing, packaging and pricing apparatus 100 can prevent processing of cut meat having an elapsed expiration date.

### (5-7) Modification G

In the embodiment, the weighing, packaging and pricing apparatus 100 automatically sets the expiration date of dressed meat merchandise on the basis of the current date. However, the weighing, packaging and pricing apparatus 100 may allow the operator to set the expiration date of dressed meat merchandise. In this case, after acquiring the expiration date of cut meat, the weighing, packaging and pricing apparatus 100 displays, on the display panel 22 of the input and display unit 20, a screen image for setting the expiration date of dressed meat merchandise. The operator of the weighing, packaging and pricing apparatus 100 operates the input buttons 24 of the input and display unit 20 to set the expiration date of the dressed meat merchandise. Expiration dates for dressed meat merchandise that can be set by the operator are dates equal to or before the expiration date of the cut meat that is the origin thereof. As a result, the operator of the weighing, packaging and pricing apparatus 100 can as necessary set the expiration date of dressed meat merchandise.

### (5-8) Modification H

In the embodiment, if the expiration date of cut meat is before the expiration date of dressed meat merchandise, the weighing, packaging and pricing apparatus 100 automatically modifies the expiration date of the dressed meat merchandise to the expiration date of the cut meat. However, the weighing, packaging and pricing apparatus 100 may as necessary display, on the display panel 22 of the input and display unit 20, a screen image for notifying the operator of the fact that the expiration date of the dressed meat merchandise has been automatically modified.

### (5- 9) Modification I

In the embodiment, if consistency is not maintained between the cut meat expiration date and the expiration date of the dressed meat merchandise, the weighing, packaging and pricing apparatus 100 can instruct the operator to set the expiration date of the dressed meat merchandise. However, if consistency is not maintained between the cut meat expiration date and the expiration date of the dressed meat merchandise, the weighing, packaging and pricing apparatus 100 may ask the operator whether or not the expiration date of the dressed meat merchandise may be modified automatically. If the operator responds that the expiration date of the dressed meat merchandise may be modified automatically, the weighing, packaging and pricing apparatus 100 automatically modifies the expiration date of the dressed meat merchandise to, for example, the expiration date of the cut meat.

### (5-10) Modification J

The food expiration date management apparatus according to the embodiment is a weighing, packaging and pricing apparatus 100 that is used in a retail establishment such as a supermarket. However, the food expiration date management apparatus may be another apparatus that is used in a retail establishment. For example, the food expiration date management apparatus may be a label printing apparatus and a weighing and pricing apparatus.

The label printing apparatus is an apparatus that prints a label to be affixed to the packaging film of merchandise that has been processed from perishable food. Specifically, the label printing apparatus is an apparatus that is principally provided with constituent elements corresponding to the input and display unit 20, printing unit 30, readout unit 40, and control unit 50 of the embodiment.

The weighing and pricing apparatus is an apparatus that weighs merchandise processed from perishable food and calculates a price for the merchandise on the basis of the weighed weight of the merchandise. Specifically, the weighing and pricing apparatus is an apparatus that is principally provided with constituent elements corresponding to the weighing unit 10, input and display unit 20, readout unit 40, and control unit 50 of the embodiment.

Similarly to the weighing, packaging and pricing apparatus 100, the label printing apparatus and the weighing and pricing apparatus can compare the expiration date of perishable food that is to be the origin of merchandise and the expiration date of the merchandise, and can detect whether or not consistency is maintained between the two. Consequently, the label printing apparatus and the weighing and pricing apparatus can appropriately manage the expiration dates of merchandise processed from perishable food.

### (5-11) Modification K

The food expiration date management apparatus according to the embodiment is used in a retail establishment such as a supermarket. However, the food expiration date management apparatus may be used in places other than retail establishments. For example, the food expiration date management apparatus may be used in factories such as food processing facilities that manufacture merchandise obtained by processing perishable food and sell the merchandise at wholesale to retail establishments. In this case, the food expiration date management apparatus is the weighing, packaging and pricing apparatus 100 of the embodiment, the label printing apparatus and the weighing and pricing apparatus of Modification J, or the like.

### INDUSTRIAL APPLICABILITY

A food expiration date management apparatus according to the present embodiment can rigorously manage the expiration dates of merchandise processed from food.

### REFERENCE SIGNS LIST

100 Weighing, packaging and pricing apparatus (food expiration date management apparatus)
151 Cut meat expiration date acquisition unit (acquisition unit)
152 Merchandise expiration date generation unit (generation unit)
153 Comparison condition determination unit (determination unit)
154 Expiration date modification unit (modification unit)
156 Manufacturing prohibition unit (prohibition unit)
157 Label issuing control unit (issuing unit)
158 Warning display unit (warning unit)

### CITATION LIST

### PATENT LITERATURE

Patent Document 1: Japanese Laid-open Patent Publication No. 2003-237143

## Claims

1. A food expiration date management apparatus that manages expiration dates of merchandise obtained by processing perishable food, the food expiration date management apparatus comprising:
an acquisition unit configured to acquire a first expiration date that is an expiration date of the perishable food;
a generation unit configured to generate a second expiration date that is an expiration date of the merchandise; and
a determination unit configured to compare the first expiration date and the second expiration date, and determine whether or not a prescribed condition is satisfied.

2. The food expiration date management apparatus according to claim 1, further comprising a modification unit, wherein;
the determination unit is configured to determine that the prescribed condition is not satisfied when the first expiration date is before the second expiration date; and,
the modification unit is configured to automatically modify the second expiration date to the first expiration date when the prescribed condition is not satisfied.

3. The food expiration date management apparatus according to claim 1, further comprising an issuing unit configured to issue a label to be affixed to the merchandise, wherein;
the determination unit is configured to determine that the prescribed condition is not satisfied when the first expiration date is before the second expiration date; and
the issuing unit is configured to stop issuing of the label when the prescribed condition is not satisfied.

4. The food expiration date management apparatus according to claim 1, further comprising a warning unit, wherein;
the determination unit is configured to determine that the prescribed condition is not satisfied when the first expiration date is before the second expiration date; and
the warning unit is configured to issue a warning when the prescribed condition is not satisfied.

5. The food expiration date management apparatus according to any one of claims 1 to 4, further comprising a prohibition unit, wherein;
the determination unit is further configured to determine whether or not a time period until the first expiration date is shorter than a prescribed time period; and,
the prohibition unit is configured to prohibit processing of the perishable food when the determination unit has determined that the time period until the first expiration date is shorter than the prescribed time period.
